# EUROPEAN PATENT APPLICATION

(11) **EP 1 867 229 A1**
(43) Date of publication of application: **19.12.2007**
(21) Application number: 07075459.3
(22) Date of filing: 11.06.2007
(51) Int. Cl.: A01K 83/06, A01K 85/00

(54) **Device for catching fish**

(30) Priority: 18.06.2006 NL 1032025
(71) Applicant: Vendrik, Johannes Cornelis, 3615 AP Westerbroek (NL)
(72) Inventor: Vendrik, Johannes Cornelis, 3615 AP Westerbroek (NL)
(74) Representative: Lips, Hendrik Jan George

(57) **Abstract**

Device for catching fish comprising: a plastic element (1) serving as bait, means (4-9) for connecting a fishing line (12) to said element, and at least two members (11, 15) provided with barbs (10, 14), said barbs extending in substantially opposite directions during use of the device. The bait fish (1) is provided with a member (2) of lead, for example, provided with at least one bore (6) through which a leg (5, 7) of a wire bracket (4) can be stuck in order to secure said wire bracket to said member (2) by bending said leg. The wire bracket extends almost parallel to the longitudinal direction and at some distance from the back (3) of the bait fish (1). An eyelet (9) is movable along said wire bracket (4) and is connected to one end of a barb member (11), turned away from the barbs (10), the other end of the barb member being connectable to a fishing line (12).

## Description

The invention relates to a device for catching fish comprising: a plastic element serving as bait fish, means for connecting a fishing line to said element, and at least two members provided with barbs, said barbs extending in substantially opposite directions during use of the device.

Such a device is known from US 5 189 826 A. There, one employs a plastic bait fish; which will be connected to the fishing line by means of an element comprising two clamping jaws being pivotable and resilently in respect to one another. This element is also used to connect the anchor-shaped members and the fishing line.

A difficulty is that such a device is relatively laborious and will be of considerable weight.

Additionally, when using the device, the point of gravity of the bait fish will always be at a distance from the point, where de bait fish is connected to the fishing line.
Thus, the bait fish will almost always be in an oblique position with its head directed upwards.

A further disadvantage is that the barb situated near the bait fish tail will only be operative when a fish approach es the bait fish from the tail. When a prey fish with its mouth wide open approaches the bait fish head, it will immediately contact the fishing line. Due to this, there is a high risk that the bait fish will be struck out off the mouth and usually will not end up into the mouth. The direction of the bend of the hook will not allow it to be hooked in the prey fish mouth.

According to the invention, the bait fish of plastic is provided with a member made of a material of relatively high density, comprising means for connecting with it an elongated wire bracket extending almost parallel to the longitudinal direction and at some distance from the back of said bait fish, an eyelet being movable along said wire bracket and being connected to one end of a barb member, said one end being turned away from the barbs and the other end of the barb member being provided with means for connecting a fishing line to it.

In this way, a very simple device is achieved while the point where the fishing line is connected to the bait fish is moveable along the bait fish, so that the bait fish will be in a more horizontally or more obliquely directed position than with the known device. Thus, the prey fish will be able to approach the bait fish from both ends.

When the bait fish is approached from the head side, the prey fish head will ultimately contact the fishing line as well and since the hook is situated in the direction of the fishing line, the prey fish will hook itself.

It is possible to secure the other barb member to the plastic of the bait fish, either to the member of material having a relatively high density, either to the wire bracket as such.

Preferably, however, it will be provided for, that the other barb member is connected to the part of the wire bracket directed towards the bait fish tail through a line.

The relatively small member connected to the bait fish will in particular be made of lead or a similar material, and this member will have at least one bore through which a leg connected to the wire bracket can be stuck and can be secured to it by a bent portion thereof. Thus, the wire bracket can be mounted onto a bait fish in a very simple and easy way.

For a firm connection of the wire bracket to the bait fish, it will be particularly provided for, that the member comprises two spaced-apart bores and that the wire bracket is provided with two legs adapted to said bores, both being securable through a bent part thereof.

Thus, mounting the wire bracket to a bait fish is very simple and bait fishes of various dimensions can be used as long as both bores are at almost equal distances from one another.

US 4 910 907 A desribes a device substantially corresponding to the device described in the above-mentioned publication. Here, only the shape of the clamping jaws has been changed such, that they can be operated more conveniently. Here too, the plastic bait fish is struck from the mouth of the prey fish by the fishing line.

FR 965 340 A describes a device in which an element made of lead is secured to a bait fish by means of a thread bent in a U-shape, that can be bent at the other side of the bait fish. The fishing line extends through said element, so it is fixedly connected to said element. The free end of the fishing line is provided with an eyelet to which two lines are connected, each being provided with a barb member. Therefore the location of the barbs in relation to the bait fish can vary strongly. Further, the effectivity of the device will be adversely affected since here too, the fishing line will be struck from the mouth of the prey fish when it approaches the bait fish from the head.

Finally US 2003/159331 A1 discloses a device in which a plastic bait fish is mounted to a hook directly connected to a float. Thus, this gives rise to the same difficulties as with the previously described publications.

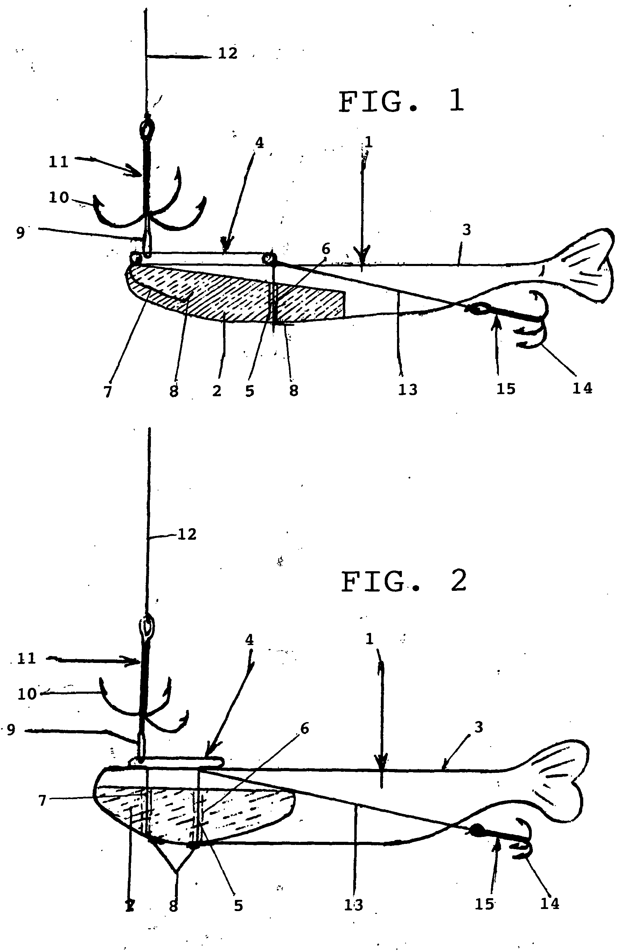

The invention will now be explained further by way of two embodiments, both illustrated in elevational view in figures 1 and 2 of the accompanying drawing.

The device according to the invention, illustrated in fig. 1, firstly comprises a bait fish 1 of plastic, incorporating a member 2 consisting of lead in particular.

A wire bracket 4 extends along the back 3 of the bait fish 1 and is connected to member 2 by being provided with a leg 5, which is stuck through a bore 6 in member 2. A second leg 7 of the wire bracket is fixed into the member 2. The legs 5 and 7 of the wire bracket are obtained by circular bending the wire of the wire bracket one or more times. At the same time this causes the wire bracket 4 to be at some distance from the back 3 of the bait fish 1. Further the leg 5 will be provided with a bent part 8 for tightly fixing said wire bracket 4.

An eyelet 9 is freely movable along the wire bracket 4 between the positions A and B and is connected to one end of a member 11 provided with barbs 10. The other end of said member 11 is connected to the fish line 12

A further line 13 is connected to the wire bracket 4, that can extend partly through the bait fish 1 and is connected to a second member 15 provided with barbs 14.

Now when the device is lowered into the water on use, the resistance of the water will cause the eye 9 to move along the wire bracket 4 from position A to position B. The shape an d length of member 2 will be such that the eyelet 9 will remain taking up this position. Therefore, the bait fish 1 will hang in the water in a slightly oblique position with its head downwards. In case of a bite by a prey fish straight from the front or obliquely from the front, the barb member 11 will automatically hook itself into the upper jaw of the prey fish when the upper jaw hits the fishing line 12. On taking the bait fish 1 in, the eye 9 will move to position A.

The embodiment according to fig. 2 largely corresponds to that of fig. 1. Thus, corresponding parts have been identified with the same reference numbers.

In the embodiment according to fig. 2, the wire bracket 4 is provided with two parallel legs 5 and 7 and the member 2 is provided with two bores 6 through which said legs extend. Both legs 5 and 7 are provided with a bent part 8 for fixing said bracket 4 to said member 2. Locating the legs 5 and 7 at some distance from the ends of wire bracket 4, the latter is kept spaced from the back 3 of the bait fish 3, in the same way as in the embodiment according to fig. 1.

It will be obvious, that only two possible embodiments of a device according to the invention have been illustrated in the drawings and is described above and that many changes can be made without being beyond the inventive idea, as this is indicated in the claims.

## Claims

1. Device for catching fish comprising: a plastic element (1) serving as bait fish, means (4-9) for connecting a fishing line (12) to said element, and at least two members (11,15) provided with barbs (10,14), said barbs extending in substantially opposite directions during use of the device, **characterized in that** the bait fish (1) of plastic is provided with a member (2) made of a material of relatively high density, comprising means (6) for connecting with it an elongated wire bracket (4) extending almost parallel to the longitudinal direction and at some distance from the back (3) of said bait fish (1), an eyelet (9) being movable along said wire bracket (4) and being connected to one end of a barb member (11), said one end being turned away from the barbs and the other end of the barb member being provided with means for connecting a fishing line (12) to it.

2. Device according to claim 1, **characterized in that** the other barb member (14) is connected to the part of the wire bracket (4) directed towards the bait fish (1) tail through a line (13).

3. Device according to claim 1 or 2, **characterized in that** the relatively small member (2) connected to the bait fish (1) is made of lead or a similar material, and this member (2) will have at least one bore (6) through which a leg (5, 7) connected to the wire bracket (4) can be stuck and can be secured to it by a bent part (8) thereof.

4. Device according to claim 3, **characterized in that** the member (2) comprises two spaced-apart bores (6) and that the wire bracket (4) is provided with two legs (5, 7) adapted to said bores, both being securable by a bent part thereof.
